# EUROPÄISCHE PATENTSCHRIFT

(11) **EP 4 226 053 B1**
(45) Veröffentlichungstag und Bekanntmachung des Hinweises auf die Patenterteilung: **04.02.2026**
(21) Anmeldenummer: 22737732.2
(22) Anmeldetag: 09.06.2022
(51) Int. Cl.: F16B 5/02

(54) **VORRICHTUNG ZUR BEFESTIGUNG AN EINEM BAUTEIL**
APPARATUS FOR FASTENING TO A COMPONENT
APPAREIL DE FIXATION À UN COMPOSANT

(30) Priorität: 28.06.2021 DE 102021206692
(43) Veröffentlichungstag der Anmeldung: 16.08.2023
(73) Patentinhaber: Springfix Befestigungstechnik GmbH, 73084 Salach (DE)
(72) Erfinder: HIPPELI, Sebastian, 97647 Nordheim vor der Rhön (DE); ECKLE, Anja, 73333 Gingen an der Fils (DE)
(74) Vertreter: Ullrich & Naumann PartG mbB
(86) Internationale Anmeldenummer: PCT/DE2022/200112
(87) Internationale Veröffentlichungsnummer: WO 2023/274459

(56) Entgegenhaltungen:
- EP-B1- 3 286 440
- DE-A1- 102018 201 496
- DE-B3- 10 362 429
- DE-U1- 20 016 150

## Beschreibung

Die Erfindung betrifft eine Vorrichtung zur Befestigung an einem Bauteil mit einem Grundkörper und einem Ausgleichselement, wobei das Ausgleichselement mit dem Grundkörper über ein Gewinde verbunden ist und wobei das Ausgleichselement einen Durchgang mit einer Mitnahmeeinrichtung für eine Schraube aufweist.

Vorrichtungen der in Rede stehenden Art sind seit Jahren aus der Praxis bekannt und dienen beispielsweise der Fixierung von zwei Bauteilen, deren Abstand zueinander toleranzbehaftet ist. Entsprechende Vorrichtungen werden unter anderem zur Montage von Scheinwerfern in einem Kraftfahrzeug verwendet.

Bei den bekannten Vorrichtungen ist unterhalb des Grundkörpers eine Mutter angeordnet, in die eine Schraube eingeschraubt wird. Mit dem Eindrehen der Schraube in das Gewinde der Mutter wird das Ausgleichselement aufgrund einer Mitnahmeeinrichtung, die die Schraube und das Ausgleichselement miteinander verbindet, ebenfalls gedreht. Durch eine gegensinnige Drehrichtung der Schraubverbindung von Grundkörper und Ausgleichselement und des Gewindes der Mutter wird mit dem Eindrehen der Schraube das Ausgleichselement aus dem Grundkörper herausgeschraubt, bis es mit seinem Anschlagbereich an ein zweites Bauteil anstößt. Somit ermöglicht diese Konstruktion einen Toleranzausgleich bei der Fixierung von zwei Bauteilen, deren Abstand zueinander nicht eindeutig bestimmt ist, und werden daher auch aus Toleranz-Ausgleichs-Element bezeichnet.

Entsprechende Vorrichtungen sind beispielsweise aus der FR 2 792 039 B1 und der DE 100 34 968 A1 vorbekannt.

Die Montage solcher Vorrichtungen erfolgt beispielsweise im Automobilbau in Fließfertigung und ist daher in relativ kurz bemessener Zeit zu bewerkstelligen. Auch ist es denkbar, dass die Vorrichtungen automatisiert angebracht werden. Dabei ist problematisch, dass die Mitnahmeeinrichtungen beim Einführen der Schrauben recht hohen Kräften ausgesetzt sind und daher Beschädigungen auftreten können. Sofern die Vorrichtungen aufgrund der Beschädigung nicht ordnungsgemäß befestigt werden können, müssen diese ausgetauscht werden, wodurch die Produktion aufgehalten wird, was unbedingt zu vermeiden ist.

Die DE 103 62 429 B3 zeigt in den Figuren 27 und 28 ein Toleranz-Ausgleichselement mit einem Grundkörper und einem mit diesem über ein Gewinde verbundenes Ausgleichselement. Das Ausgleichselement weist einen Durchgang auf, in dem Reibschlusszunge angeordnet sind, welche als Mitnahmeeinrichtung für eine Schraube dient. Des Weiteren sind ähnliche Vorrichtungen in DE 10 2018 201 496 A1, DE 200 16 150 U1 und EP 3 286 440 B1 beschrieben.

Der vorliegenden Erfindung liegt die Aufgabe zugrunde, eine Vorrichtung der eingangs genannten Art derart auszugestalten und weiterzubilden, dass mit konstruktiv einfachen Mitteln eine zuverlässige Befestigung in kurzer Zeit möglich ist und Beschädigungen der Vorrichtung während der Montage vermieden werden.

Erfindungsgemäß wird die voranstehende Aufgabe durch die Merkmale des Anspruches 1 gelöst. Danach ist die in Rede stehende Vorrichtung zur Befestigung an einem Bauteil mit einem Grundkörper und einem Ausgleichselement, wobei das Ausgleichselement mit dem Grundkörper über ein Gewinde verbunden ist und wobei das Ausgleichselement einen Durchgang mit einer Mitnahmeeinrichtung für eine Schraube aufweist, dadurch gekennzeichnet, dass in dem Durchgang mindestens ein Zentrierelement zur Ausrichtung der Schraube ausgebildet ist und dass das Zentrierelement als in Radialrichtung in den Durchgang hineinreichende Zentrierrippe ausgebildet ist.

In erfindungsgemäßer Weise ist zunächst erkannt worden, dass für eine sichere und schnelle Montage der Vorrichtung die Schraube möglichst zentral in den Durchgang einzuführen ist. Hierdurch wird erreicht, dass die Schraube nicht an der Mitnahmeeinrichtung verkantet und diese somit durch die Einführbewegung beschädigt. In weiter erfindungsgemäßer Weise ist dabei erkannt worden, dass eine zentrierte Einführung der Schraube auf besonders einfache Weise gewährleistet werden kann, indem mindestens ein Zentrierelement in bzw. an dem Durchgang ausgebildet ist. Dadurch wird die Schraube beim Einführen zunächst derart ausgerichtet, dass sie ohne ein Verkanten an der Mitnahmeeinrichtung vorbeigeführt werden kann.

Es wird darauf hingewiesen, dass die Schraube nicht zwangsweise Teil der beanspruchten Vorrichtung gemäß Anspruch 1 sein muss. Jedoch ist es möglich, dass die Schraube Teil dieser Vorrichtung ist.

In erfindungsgemäßer Weise ist das Zentrierelement als in Radialrichtung in den Durchgang hineinreichende Zentrierrippe ausgebildet.

Die Zentrierrippe verläuft dabei zumindest im Wesentliche parallel zur Einführrichtung der Schraube bzw. zur Erstreckungsrichtung des Durchgangs. Eine solche Konstruktion ist besonders einfach herzustellen und gewährleistet, dass die Schraube korrekt ausgerichtet in die Vorrichtung eingeführt wird.

In weiter vorteilhafter Weise können mehrere Zentrierelemente, insbesondere Zentrierrippen, Zentriernase oder Zentriervorsprünge, in Umfangsrichtung des Durchgangs angeordnet sein. Somit kann die Schraube in Umfangsrichtung von mehreren Rippen geführt sein, wodurch die Ausrichtung besonders exakt einstellbar ist. Vorzugsweise können die Zentrierelemente, beispielsweise die Zentrierrippen, jeweils äquidistant zu dem nächstliegenden Zentrierelement, beispielsweise der nächstliegenden Zentrierrippe, ausgebildet sein. Beispielsweise könnten sechs Zentrierrippen jeweils in einem Winkel von 60° um den Durchgang herum angeordnet sein. Alternativ ist es denkbar, dass ein einziges Zentrierelement angeordnet ist, dass in Umfangsrichtung, vorzugsweise vollständig, um den Durchgang herum verläuft und sich in Radialrichtung in den Durchgang erstreckt.

In besonders vorteilhafter Weise kann das Zentrierelement einteilig mit dem Ausgleichselement ausgebildet sein. Eine solche Konstruktion ist besonders einfach in der Herstellung. Beispielsweise könnten das Ausgleichselement und das Zentrierelement aus Kunststoff bestehen und insbesondere im Spritzgussverfahren hergestellt sein.

Um die Schraube noch einfacher in den Durchgang einführen zu können, kann das freie Ende des Zentrierelements eine Fase aufweisen. Die Fase dient somit als Einführhilfe für die Schraube.

In weiter vorteilhafter Weise kann die Mitnahmeeinrichtung als Federelement ausgebildet sein. Bei dem Federelement kann es sich um eine Federklemme handeln, die beispielsweise als gebogenes Metallteil hergestellt ist. Wesentlich ist, dass die Mitnahmeeinrichtung eine kraftschlüssige Verbindung mit der Schraube eingeht, um das Ausgleichselement bei einer Drehung der Schraube mitzudrehen.

Gemäß einer vorteilhaften Ausgestaltung kann die Mitnahmeeinrichtung formschlüssig mit dem Ausgleichselement verbunden sein. Dadurch wird erreicht, dass die Mitnahmeeinrichtung auf besonders einfache Weise ausreichend fest mit dem Ausgleichselement verbunden ist, so dass dieses der Drehbewegung der Schraube folgen kann. Ein "Rutschen" zwischen Ausgleichselement und Mitnahmeeinrichtung wird verhindert.

In vorteilhafter Weise kann mindestens ein Befestigungselement in Radialrichtung in den Durchgang hineinragen, um die Mitnahmeeinrichtung formschlüssig mit dem Ausgleichselement zu verbinden. Ein solches Befestigungselement ist besonders einfach herzustellen, kann beispielsweise einteilig mit dem Ausgleichselement ausgebildet sein.

In besonders vorteilhafter Weise kann das Befestigungselement als Befestigungsrippe bzw. Befestigungsnase oder Befestigungsvorsprung ausgebildet sein, die vorzugsweise in Radialrichtung in den Durchgang hineinragt. Die Befestigungsrippe kann zumindest im Wesentlichen parallel zur Einführrichtung der Schraube bzw. zur Erstreckungsrichtung des Durchgangs verlaufen.

Gemäß einer weiteren vorteilhaften Ausgestaltung kann der Grundkörper ein Grundelement und einen formschlüssig mit dem Grundelement verbundenen Haltering aufweisen. Eine solche mehrteilige Ausgestaltung hat den Vorteil, dass die einzelnen Bestandteile einfacher herzustellen sind, beispielsweise ein Gewinde an dem Grundelement, das komplementär zu einem Gewinde an dem Ausgleichselement ausgebildet ist. Dabei ist des Weiteren erkannt worden, dass durch einen Formschluss zwischen Grundelement und Haltering auch bei höheren Drehmomenten verhindert wird, dass diese Bauteile sich voneinander lösen, wie dies beispielsweise bei aus dem Stand der Technik bekannten Vorrichtungen der Fall ist, welche lediglich durch einen Kraftschluss aneinander festgelegt werden.

In vorteilhafter Weise kann der Haltering mindestens eine Nut bzw. Ausnehmung aufweisen und das Grundelement mindestens eine zu der Nut komplementär ausgebildete Rippe bzw. eine Nase oder einen Vorsprung aufweisen, um einen Formschluss zu erzielen. Die Nut und die Rippe könnten zumindest im Wesentlichen parallel zur Einführrichtung der Schraube bzw. zur Erstreckungsrichtung des Durchgangs verlaufen.

Dabei ist es des Weiteren denkbar und von Vorteil, wenn mindestens zwei Nuten eine unterschiedliche Form aufweisen und/oder dass mindestens zwei Rippen eine unterschiedliche Form aufweisen. Dadurch kann auf einfache Weise erreicht werden, dass der Haltering und das Grundelement lediglich in einer bestimmten Position bzw. in bestimmten Positionen miteinander verbunden werden können.

Es gibt nun verschiedene Möglichkeiten, die Lehre der vorliegenden Erfindung in vorteilhafter Weise auszugestalten und weiterzubilden. Dazu ist einerseits auf die dem Anspruch 1 nachgeordneten Ansprüche und andererseits auf die nachfolgende Erläuterung bevorzugter Ausführungsbeispiele der Erfindung anhand der Zeichnung zu verweisen. In Verbindung mit der Erläuterung der bevorzugten Ausführungsbeispiele der Erfindung anhand der Zeichnung werden auch im Allgemeinen bevorzugte Ausgestaltungen und Weiterbildungen der Lehre erläutert. In der Zeichnung zeigen
- Fig. 1: in einer schematischen Darstellung eine geschnittene Ansicht einer erfindungsgemäßen Vorrichtung im Grundzustand,
- Fig. 2: in einer schematischen Darstellung eine geschnittene Ansicht der Vorrichtung gemäß Fig. 1 im ausgedrehten Zustand,
- Fig. 3: in einer schematischen Darstellung eine weitere Ansicht der Vorrichtung gemäß Fig. 1,
- Fig. 4: in einer schematischen Darstellung eine Draufsicht der Vorrichtung gemäß Fig. 1,
- Fig. 5: in einer schematischen Darstellung eine weitere Draufsicht der Vorrichtung gemäß Fig. 1,
- Fig. 6: in einer schematischen Darstellung eine geschnittene Ansicht des Grundkörpers und des Ausgleichselements der Vorrichtung gemäß Fig. 1,
- Fig. 7: die Darstellung aus Fig. 6 wobei zusätzlich die Mitnahmeeinrichtung dargestellt ist, und
- Fig. 8: in einer schematischen Darstellung eine geschnittene Ansicht des Grundkörpers der Vorrichtung gemäß Fig. 1.

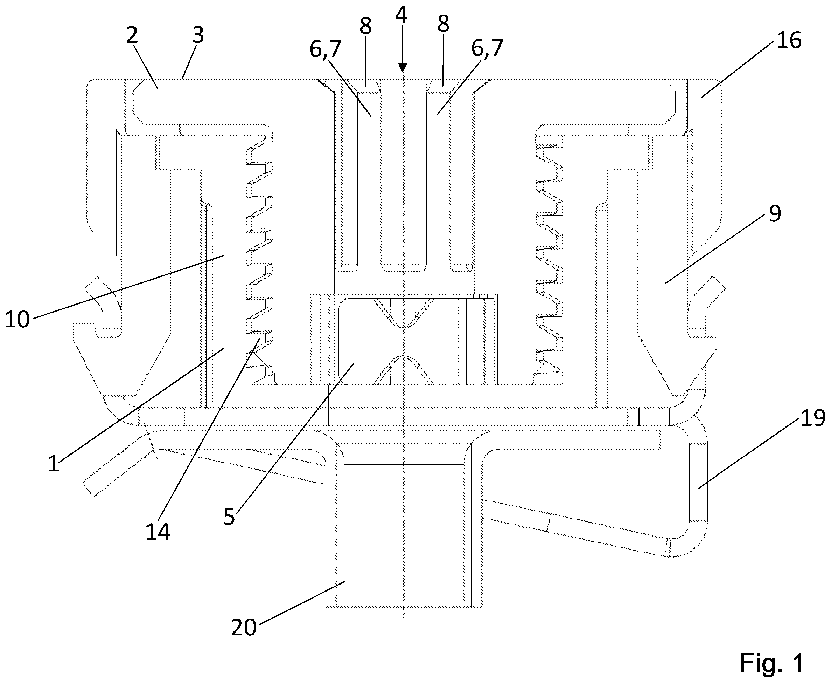

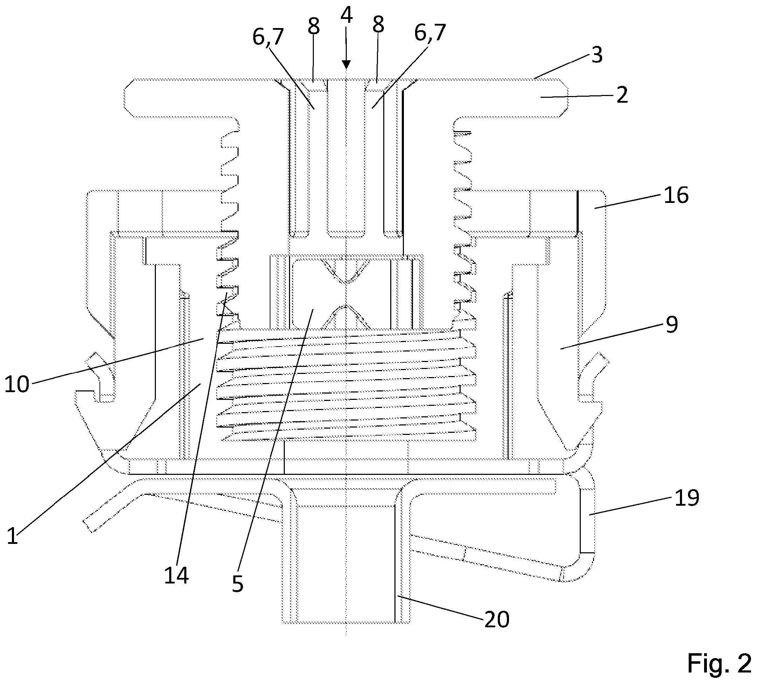

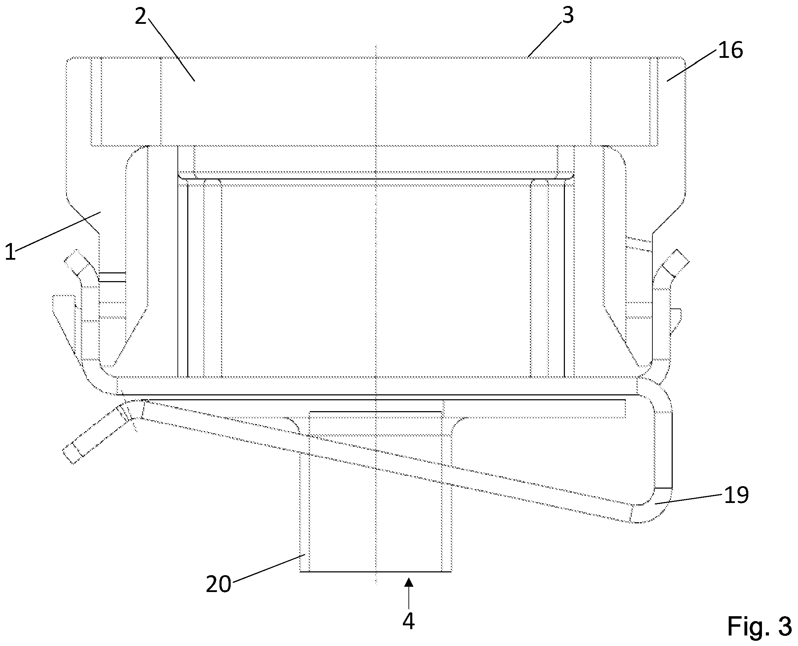

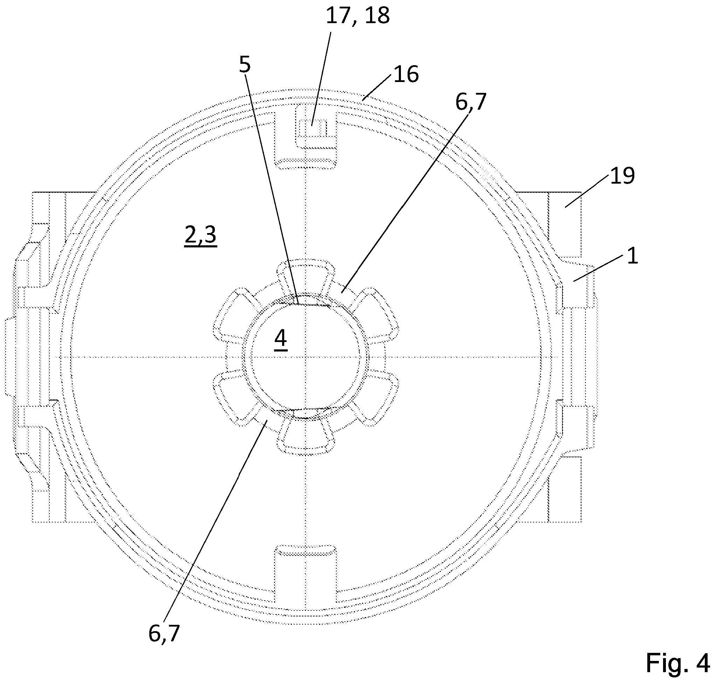

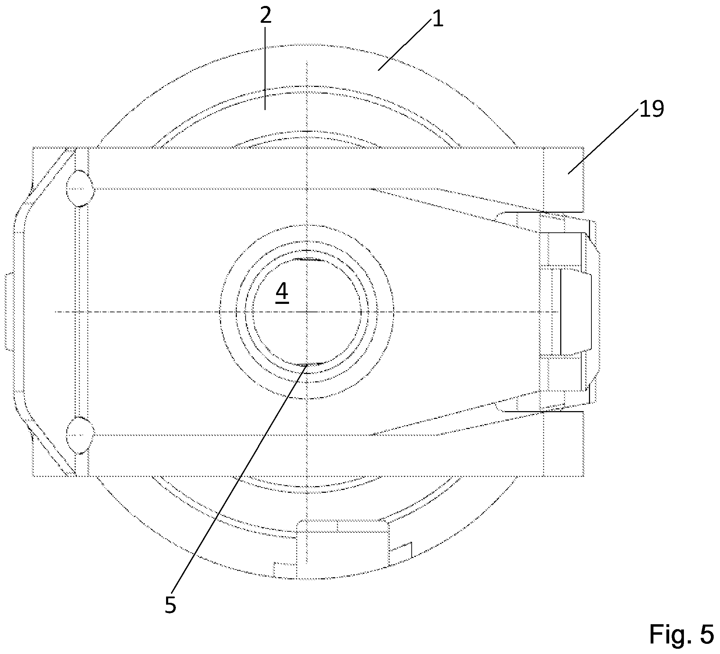

In den Fig. 1 bis 8 ist ein Ausführungsbeispiel einer erfindungsgemäßen Vorrichtung dargestellt, wobei zur Verbesserung der Übersichtlichkeit in einigen Figuren nicht jedes Bauteil mit einem Bezugszeichen versehen ist.

Die Vorrichtung dient zur Befestigung an einem nicht dargestellten Bauteil, insbesondere zum Toleranzausgleich von zwei miteinander zu verbindenden Bauteilen. Die Vorrichtung umfasst einen Grundkörper 1 und ein Ausgleichselement 2, die über ein Gewinde 14 miteinander verbunden sind. Das Ausgleichselement 2 weist eine Anschlagfläche 3 auf und eine in einem Durchgang 4 angeordnete Mitnahmeeinrichtung 5 für eine nicht dargestellte Schraube. Die Mitnahmeeinrichtung 5 ist dabei als Federklemme ausgebildet.

In dem Durchgang 4 sind mehrere Zentrierelemente 6 vorgesehen, die erfindungsgemäß als Zentrierrippen 7 realisiert sind. Diese ragen in Radialrichtung in den Durchgang 4 hinein und erstrecken sich parallel zur Einführrichtung der Schraube bzw. zur Erstreckungsrichtung des Durchgangs 4. Somit wird eine in den Durchgang 4 eingeführte Schraube derart ausgerichtet, dass ein Verkanten an der Mitnahmeeinrichtung 5 verhindert wird. Des Weiteren ist zu erkennen, dass die freien Enden der Zentrierrippen 7 eine Fase 8 aufweisen, die als Einführhilfe für die Schraube dient.

In dem hier gezeigten Ausführungsbeispiel sind die Zentrierrippen 7 einteilig mit dem Ausgleichselement 2 ausgebildet, wobei dies nicht zwangsweise der Fall sein muss.

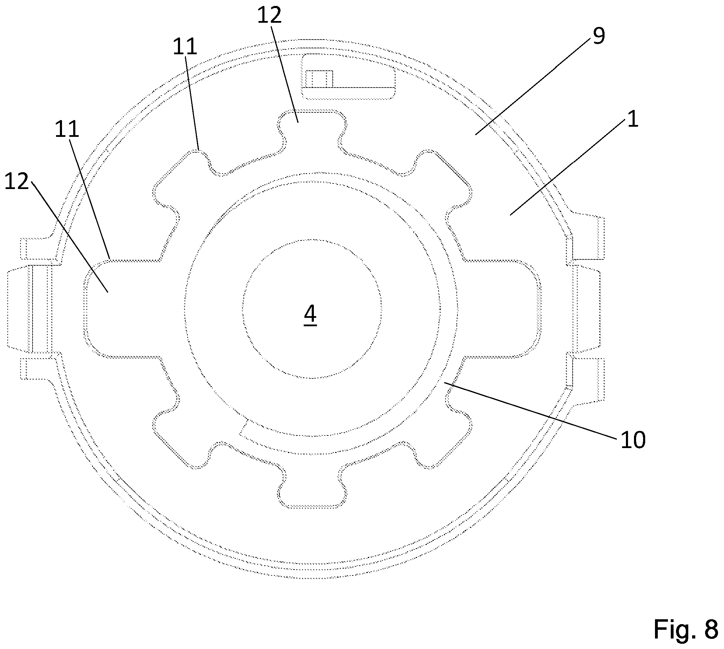

Des Weiteren ist zu erkennen, dass der Grundkörper 1 zweiteilig ausgebildet ist, nämlich aus einem Haltering 9 und einem darin angeordneten Grundelement 10 besteht. Insbesondere Figur 8 ist zu entnehmen, dass der Haltering 9 mehrere Nuten 11 aufweist und dass an dem Grundelement 10 mehrere dazu komplementär ausgebildete Rippen 12 vorgesehen sind. Dabei wird darauf hingewiesen, dass bereits eine einzige Nut 11 mit einer einzigen Rippe 12 ausreichend sein könnte.

Durch die Nuten 11 und die Rippen 12 wird eine formschlüssige Verbindung zwischen Grundelement 10 und Haltering 9 ermöglicht. Des Weiteren ist zu erkennen, dass zwei unterschiedliche Ausgestaltungen von Nuten 11 und dazu komplementären Rippen 12 vorgesehen sind. Dadurch wird erreicht, dass das Grundelement 10 lediglich in zwei definierten Ausrichtungen gegenüber dem Haltering 9 angeordnet werden kann.

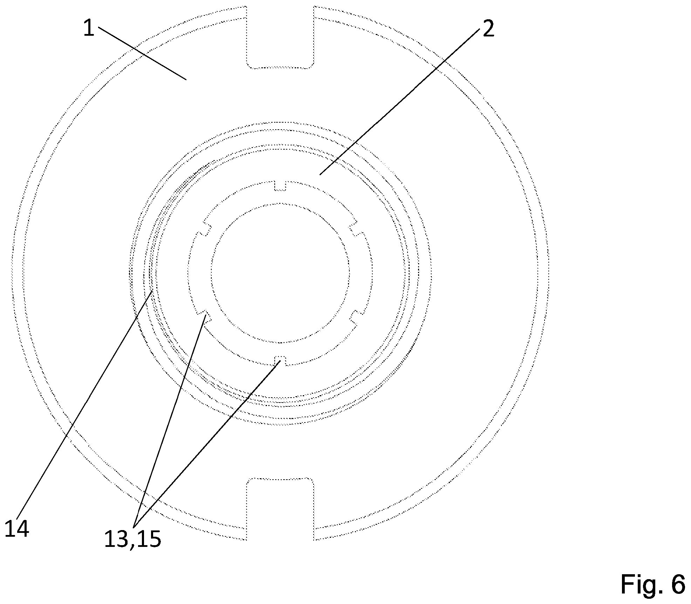

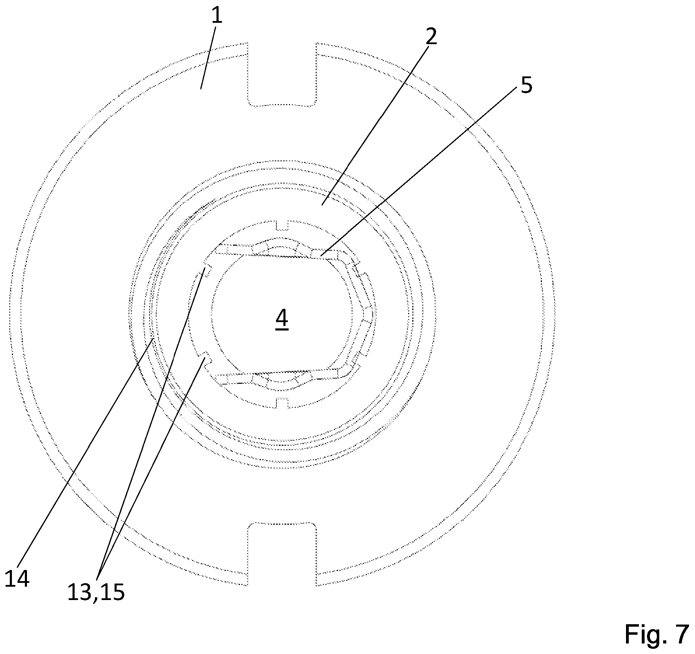

Insbesondere den Fig. 6 und 7 ist zu entnehmen, dass die Mitnahmeeinrichtung 5 formschlüssig an dem Ausgleichselement 2 angeordnet ist. Hierzu sind an dem Ausgleichselement 2 mehrere Befestigungselemente 13 ausgebildet, die in Radialrichtung in den Durchgang 4 hineinragen. Die Mitnahmeeinrichtung 5 kann Ausnehmungen aufweisen, in welche die als Befestigungsrippen 15 ausgebildeten Befestigungselemente 13 hineinragen. Alternativ oder zusätzlich kann die Mitnahmeeinrichtung 5 an den Befestigungselementen 13 angreifen, beispielsweise mit einer Kante. Wesentlich ist, dass ein Formschluss zwischen Mitnahmeeinrichtung 5 und Ausgleichselement 2 realisiert ist, so dass über die Mitnahmeeinrichtung 5 eine Drehbewegung von der Schraube zuverlässig auf das Ausgleichselement 2 übertragbar ist, ohne dass die Mitnahmeeinrichtung 5 verrutscht.

In den Figuren 1 bis 3 ist zu erkennen, dass der das Ausgleichselement 2 umgebende Rand 16 erhöht ausgebildet ist, d.h. er erstreckt sich zumindest teilweise in Richtung des Ausgleichselements 2, so dass der Rand 16 das Ausgleichselement 2 seitlich zumindest teilweise umschließt, wenn das Ausgleichselement 2 vollständig in den Grundkörper 1 eingeschraubt ist. Weiterhin ist an dem Grundkörper 1 ein als Transportsicherung dienendes elastisches Element 17 angeordnet, das in eine Ausnehmung 18 des Ausgleichselements 2 eingreift, wenn diese zumindest im Wesentlichen vollständig in den Grundkörper 1 eingeschraubt ist.

Um die Vorrichtung seitlich auf ein Bauteil aufschieben zu können, ist an dem Grundkörper 1 eine Halteklammer 19 ausgebildet. Des Weiteren ist an der Halteklammer 19 ein Mutternelement 20 vorgesehen, in das die Schraube eingedreht werden kann.

Hinsichtlich weiterer vorteilhafter Ausgestaltungen der erfindungsgemäßen Vorrichtung wird zur Vermeidung von Wiederholungen auf den allgemeinen Teil der Beschreibung sowie auf die beigefügten Ansprüche verwiesen.

Schließlich sei ausdrücklich darauf hingewiesen, dass die voranstehend beschriebenen Ausführungsbeispiele der erfindungsgemäßen Vorrichtung lediglich zur Erörterung der beanspruchten Lehre dienen, diese jedoch nicht auf die Ausführungsbeispiele einschränken.

### Bezugszeichenliste

- 1: Grundkörper
- 2: Ausgleichselement
- 3: Anschlagfläche
- 4: Durchgang
- 5: Mitnahmeeinrichtung
- 6: Zentrierelement
- 7: Zentrierrippe
- 8: Fase
- 9: Haltering
- 10: Grundelement
- 11: Nut
- 12: Rippe
- 13: Befestigungselement
- 14: Gewinde
- 15: Befestigungsrippe
- 16: Rand
- 17: elastisches Element
- 18: Ausnehmung
- 19: Halteklammer
- 20: Mutternelement

## Patentansprüche

1. Vorrichtung zur Befestigung an einem Bauteil mit einem Grundkörper (1) und einem Ausgleichselement (2), wobei das Ausgleichselement (2) mit dem Grundkörper (1) über ein Gewinde (14) verbunden ist und wobei das Ausgleichselement (2) einen Durchgang (4) mit einer Mitnahmeeinrichtung (5) für eine Schraube aufweist,
**dadurch gekennzeichnet, dass** in dem Durchgang (4) mindestens ein Zentrierelement (6) zur Ausrichtung der Schraube ausgebildet ist
und dass das Zentrierelement (6) als in Radialrichtung in den Durchgang (4) hineinreichende Zentrierrippe (7) ausgebildet ist.

2. Vorrichtung nach Anspruch 1, **dadurch gekennzeichnet, dass** mehrere Zentrierrippen (7), vorzugsweise jeweils äquidistant zu der nächstliegenden Zentrierrippe (7), in Umfangsrichtung des Durchgangs (4) angeordnet sind.

3. Vorrichtung nach Anspruch 1 oder 2, **dadurch gekennzeichnet, dass** das Zentrierelement (6) einteilig mit dem Ausgleichselement (2) ausgebildet ist.

4. Vorrichtung nach einem der Ansprüche 1 bis 3, **dadurch gekennzeichnet, dass** das freie Ende des Zentrierelements (6) eine Fase (8) als Einführhilfe für die Schraube aufweist.

5. Vorrichtung nach einem der Ansprüche 1 bis 4, **dadurch gekennzeichnet, dass** die Mitnahmeeinrichtung (5) als Federelement bzw. Federklemme ausgebildet ist.

6. Vorrichtung nach einem der Ansprüche 1 bis 5, **dadurch gekennzeichnet, dass** die Mitnahmeeinrichtung (5) formschlüssig mit dem Ausgleichselement (2) verbunden ist.

7. Vorrichtung nach einem der Ansprüche 1 bis 6, **dadurch gekennzeichnet, dass** mindestens ein Befestigungselement (13) in Radialrichtung in den Durchgang (4) hineinragt, um die Mitnahmeeinrichtung (5) formschlüssig mit dem Ausgleichselement (2) zu verbinden.

8. Vorrichtung nach Anspruch 7, **dadurch gekennzeichnet, dass** das Befestigungselement (13) als Befestigungsrippe (15) ausgebildet ist.

9. Vorrichtung nach einem der Ansprüche 1 bis 8, **dadurch gekennzeichnet, dass** der Grundkörper (1) ein Grundelement (10) und einen formschlüssig mit dem Grundelement (10) verbundenen Haltering (9) aufweist.

10. Vorrichtung nach Anspruch 9, **dadurch gekennzeichnet, dass** der Haltering (9) mindestens eine Nut (11) aufweist und dass das Grundelement (10) mindestens eine zu der Nut (11) komplementär ausgebildete Rippe (12) aufweist, um einen Formschluss zu erzielen.

11. Vorrichtung nach Anspruch 10, **dadurch gekennzeichnet, dass** mindestens zwei Nuten (11) eine unterschiedliche Form aufweisen und/oder dass mindestens zwei Rippen (12) eine unterschiedliche Form aufweisen.

## Claims

1. Apparatus for fastening to a component having a base member (1) and a compensation element (2), wherein the compensation element (2) is connected to the base member (1) by means of a thread (14) and wherein the compensation element (2) has a passage (4) having a carrier device (5) for a screw,
**characterised in that** at least one centering element (6) for orientating the screw is formed in the passage (4)
and **in that** the centering element (6) is in the form of a centering rib (7) which leads in a radial direction into the passage (4).

2. Apparatus according to claim 1, **characterised in that** a plurality of centering ribs (7) are arranged in the circumferential direction of the passage (4), preferably in each case equidistant from the closest centering rib (7).

3. Apparatus according to claim 1 or 2, **characterized in that** the centering element (6) is constructed integrally with the compensation element (2).

4. Apparatus according to any one of claims 1 to 3, **characterised in that** the free end of the centering element (6) has a chamfer (8) as an auxiliary introduction member for the screw.

5. Apparatus according to any one of claims 1 to 4, **characterised in that** the carrier device (5) is in the form of a resilient element or resilient clamp.

6. Apparatus according to any one of claims 1 to 5, **characterised in that** the carrier device (5) is connected to the compensation element (2) in a positive-locking manner.

7. Apparatus according to any one of claims 1 to 6, **characterised in that** at least one fastening element (13) protrudes in a radial direction into the passage (4) in order to connect the carrier device (5) to the compensation element (2) in a positive-locking manner.

8. Apparatus according to claim 7, **characterised in that** the fastening element (13) is in the form of a fastening rib (15).

9. Apparatus according to any one of claims 1 to 8, **characterised in that** the base member (1) has a base element (10) and a retention ring (9) which is connected to the base element (10) in a positive-locking manner.

10. Apparatus according to claim 9, **characterised in that** the retention ring (9) has at least one groove (11) and **in that** the base element (10) has at least one rib (12) which is constructed to complement the groove (11) in order to achieve a positive-locking connection.

11. Apparatus according to claim 10, **characterised in that** at least two grooves (11) have a different shape and/or **in that** at least two ribs (12) have a different shape.

## Revendications

1. Dispositif destiné à être fixé sur un élément de construction, comprenant un corps de base (1) et un élément de compensation (2), l'élément de compensation (2) étant relié au corps de base (1) par un filetage (14) et l'élément de compensation (2) présentant un passage (4) avec un dispositif d'entraînement (5) pour une vis,
**caractérisé en ce qu'**au moins un élément de centrage (6) est formé dans le passage (4) pour aligner la vis et **en ce que** l'élément de centrage (6) est conçu comme une nervure de centrage (7) s'étendant dans le sens radial dans le passage (4).

2. Dispositif selon la revendication 1, **caractérisé en ce que** plusieurs nervures de centrage (7), de préférence équidistantes de la nervure de centrage (7) la plus proche, sont agencées dans le sens circonférentiel du passage (4).

3. Dispositif selon la revendication 1 ou 2, **caractérisé en ce que** l'élément de centrage (6) est conçu d'un seul tenant avec l'élément de compensation (2).

4. Dispositif selon l'une des revendications 1 à 3, **caractérisé en ce que** l'extrémité libre de l'élément de centrage (6) présente un chanfrein (8) servant d'aide à l'introduction de la vis.

5. Dispositif selon l'une des revendications 1 à 4, **caractérisé en ce que** le dispositif d'entraînement (5) est conçu sous forme d'élément à ressort ou de pince à ressort.

6. Dispositif selon l'une des revendications 1 à 5, **caractérisé en ce que** le dispositif d'entraînement (5) est relié par complémentarité de forme à l'élément de compensation (2).

7. Dispositif selon l'une des revendications 1 à 6, **caractérisé en ce qu'**au moins un élément de fixation (13) fait saillie dans le sens radial dans le passage (4) afin de relier le dispositif d'entraînement (5) par complémentarité de forme à l'élément de compensation (2).

8. Dispositif selon la revendication 7, **caractérisé en ce que** l'élément de fixation (13) est conçu comme une nervure de fixation (15).

9. Dispositif selon l'une des revendications 1 à 8, **caractérisé en ce que** le corps de base (1) présente un élément de base (10) et une bague de retenue (9) reliée par complémentarité de forme à l'élément de base (10).

10. Dispositif selon la revendication 9, **caractérisé en ce que** la bague de retenue (9) présente au moins une rainure (11) et **en ce que** l'élément de base (10) présente au moins une nervure (12) conçue comme étant complémentaire à la rainure (11) afin d'obtenir un engagement positif.

11. Dispositif selon la revendication 10, **caractérisé en ce qu'**au moins deux rainures (11) présentent une forme différente et/ou **en ce qu'**au moins deux nervures (12) présentent une forme différente.
